# EUROPEAN PATENT SPECIFICATION

(11) **EP 2 478 864 B1**
(45) Date of publication and mention of the grant of the patent: **07.11.2018**
(21) Application number: 12000205.0
(22) Date of filing: 16.01.2012
(51) Int. Cl.: A61C 8/00

(54) **Assembly of a dental implant and an insertion tool**
Anordnung aus einem Zahnimplantat und einem Einführwerkzeug
Ensemble d'un implant dentaire et d'un outil d'insertion

(30) Priority: 20.01.2011 EP 11000420
(43) Date of publication of application: 25.07.2012
(73) Proprietor: Straumann Holding AG, 4002 Basel (CH)
(72) Inventor: Kuehne, Steffen, 4002 Basel (CH); Blumenthal, Silvio, 4002 Basel (CH)
(74) Representative: Schaad, Balass, Menzl & Partner AG

(56) References cited:
- WO-A1-00/27300
- WO-A1-03/020154
- JP-U- S5 046 851
- US-A- 5 174 704
- US-A1- 2007 037 121

## Description

The present invention relates to an assembly of a dental implant and an insertion tool for inserting the dental implant into the bone of a patient.
Dental implants are used to replace individual teeth or for anchoring more complex structures, which generally replace several or even all of the teeth. Many dental implants are initially fastened into the bone of a patient using external threads on the implant body. This provides the implant with primary stability during the osseointegration process.
In general, an insertion tool (or transfer piece) is used to screw the implant into the prepared implant site. This tool must engage with the implant in a way which enables torque to be transmitted from the tool to the implant. Torque can for example be transmitted via a friction fit between the tool and the implant, e.g. using complementary conical tapers.
However, in many implant systems the main bulk of torque transfer occurs via a geometrical fit between the two components.

For example, US-A-2007/037121 relates to a carry and drive device for a dental implant or component thereof of the type having a driving recess with a plurality of implant or component driving lobes, at least one of said implant or component lobes having an engagement surface portion with a radial dimension, the device comprising a driver end having a plurality of driver end driving lobes corresponding to the driving lobes of said implant or component thereof and an exterior configuration substantially matching the interior configuration of said driving recess.

WO 03/020154 relates to an implant which can cooperate with an installation tool and spacer member and which is arranged with an internal recess which extends from the upper parts of the implant and opens upward (outward), the recess being arranged with first tracks and/or ridges which, seen in the cross section of the recess, extend outward from the main periphery of the recess, in which first surfaces of said first tracks and/or ridges can cooperate with corresponding (opposite) second surfaces on second ridges and/or tracks arranged on the tightening member.

In such systems, the implant comprises either an internal or external anti-rotation means. This has a non-circular contour, e.g. a polygon, which provides a number of flat sides angularly spaced about the longitudinal axis of the implant. These flat sides are referred to herein as anti-rotation surfaces.

The co-operating insertion tool comprises, at its distal end, a complementary anti-rotation means having at least one flat surface (referred to as a torque transmission surface) which matches the anti-rotation surface(s) of the implant. When the tool is inserted into or over the anti-rotation means of the implant therefore, these surfaces align in a non-rotational manner which enables torque to be transmitted to the implant. The proximal end of the insertion tool is shaped for direct or indirect connection to a driving device, e.g. ratchet, dental hand piece, or for manual rotation.
Depending on whether the anti-rotation means of the implant is formed by a recess or a bolt, the distal end of the insertion tool is formed by a bolt or a recess, respectively. In each case, the distal end of the insertion tool has torque transmission surfaces arranged and dimensioned to be aligned with the anti-rotation surfaces of the implant upon connection in order to transmit torque.
In many systems, the cross sectional contours of the anti-rotation means of the implant and insertion tool are identical. For example, the distal end of the insertion tool can have a square cross-section for cooperation with an implant bore having an identical square cross-section. Other implant systems comprise anti-rotation means comprising e.g. hexagons or octagons.
It is also known for the cross-sectional contours of the implant and insertion tool to be non-identical as long as the anti-rotation means of both components comprise matching anti-rotation and torque transmission surfaces, e.g. a hexagonal insertion tool can be inserted into a triangular implant bore in a torque transmitting manner as three of the hexagon sides will align with the triangular sides of the bore. Therefore, although the overall cross-sectional contours of the implant and insertion tool anti-rotation means may differ, each anti-rotation means is designed to match the other to the extent that, in order to attach the insertion tool to the implant, the torque transmission surfaces must in alignment with the anti-rotation surfaces.

However, in any system, manufacturing tolerances mean that an exact fit between the implant and insertion tool is not possible. If, for example, the anti-rotation means of the insertion tool is formed by a bolt, this must be manufactured to be slightly smaller than the dimensions of the recess of the implant, in order to ensure that it will be possible to fit these components together. Alternatively, if the implant comprises a bolt, it must always be sized to fit within the recess of the insertion tool. Therefore, in practice there will always be a small amount of play between the two parts. The result of this is that the insertion tool can rotate slightly within the implant (or the implant within the insertion tool) so that instead of face-to-face contact between the anti-rotation and torque transmission surfaces there is edge-to-face contact.

This concentrates the applied force over a small area and can lead to local deformation of both the implant and insertion tool.

As a result, the insertion tool can get jammed within or over the implant, making removal difficult. In addition, since the anti-rotation means of the implant is later used to rotationally fix an abutment or prosthesis relative to the implant, deformation of the implant's anti-rotation means can lead to increased rotational play between the implant and the abutment.

The object of at least a preferred embodiment of the present invention is thus to provide a system which allows insertion of a dental implant into a bone of a patient in a safe and efficient manner. In particular, the risk of deformation of the anti-rotation means, and more particularly jamming the insertion tool in connection with the implant, shall be reduced by at least a preferred embodiment of the present invention.

The object is achieved by the assembly according to claim 1. Preferred embodiments of the invention are defined in the dependent claims.

Specifically, the present invention provides a combination of a dental implant and an insertion tool for inserting the dental implant into a bone of a patient.

The implant comprises an anti-rotation means having a non-circular cross-sectional contour which comprises at least one planar force transmission surface in the form of an anti-rotation surface.

The insertion tool comprises an anti-rotation means having a non-circular cross-sectional contour which comprises at least one planar force transmission surface in the form of a torque transmission surface.

One of the anti-rotation means forms a recess extending along a longitudinal axis and the other a bolt having a rotational axis and designed to be received in the direction of the rotational axis in the recess, such that the at least one anti-rotation surface and at least one torque transmission surface can co-operate to transmit torque between the parts.

In the assembly of the present invention the anti-rotation surface and the torque transmission surface are arranged such that, while the bolt is received in the recess, said anti-rotation surface and said torque transmission surface can be rotated relative to one another between a first, non-torque transmission position, in which said anti-rotation surface and said torque transmission surface have little or no contact, and a second, torque transmission position, in which said anti-rotation surface and said torque transmission surface are in maximum contact with each other, wherein the angle between the anti-rotation surface and the torque transmission surface is less in the second position than in the first position.
In accordance with the present invention therefore, the insertion tool comprises at least one torque transmission surface which, when in a first, non torque transmitting position, is angled or offset with respect to the anti-rotation surface. The angle between the torque transmission surface and the anti-rotation surface is such that it is continuously reduced and in the optimal case eliminated as the surfaces are brought into maximum contact with each other. In contrast to the systems of the state of the art, the position in which the surfaces according to the present invention have maximum contact corresponds to the position in which the surfaces have the least angular offset.
In use the implant and the insertion tool are first brought into axial alignment by inserting the bolt into the recess. During insertion, the torque transmission surface(s) of the insertion tool is (are) preferably in an offset position with regard to the anti-rotation surface(s) of the implant in order to reduce or eliminate friction between the parts. Once the bolt has been inserted into the recess, the insertion tool is rotated relative to the implant in order to bring the torque transmission surface(s) into maximum contact with the anti-rotation surface(s) to transfer torque from the tool to the implant and thus to screw the latter into bone.

The present invention therefore uses the rotational play that will inevitably be present in the system to align the torque transmission surface(s) with the respective anti-rotation surface (s) after coupling of the tool and the implant. This is achieved by designing the anti-rotation means of the implant and insertion tool in such a way that the anti-rotation surface and the torque transmission surface do not have matching profiles. In most prior art systems these surfaces are designed to match one another as closely as possible within the tolerance constraints. As a result of this, these surfaces are in closest angular alignment prior to any relative rotation of the parts and consequently before maximal contact between the surfaces is achieved. In contrast, in the present invention, the profiles of the anti-rotation and torque transmission surfaces are non-matching. In this way, the rotational play between the components is increased but rotation also brings the surfaces in to better angular alignment. Thus, a better surface-to-surface contact between the torque transmission surface(s) and the anti-rotation surface(s) is achieved, which in turn improves the force distribution between these two surfaces and reduces the risk of deformation of the components.

Such systems are, for example known from US 5174704 A and JP-S50468513 U.

The anti-rotation means of either the implant or insertion tool can form the bolt or the recess. Therefore, in some embodiments the implant will comprise an anti-rotation means in the form of a bolt, or boss, protruding from the coronal end of the implant. In such embodiments the insertion tool comprises a recess which can be placed over the bolt. The anti-rotation surfaces are formed on the exterior of the bolt and the torque transmission surfaces on the interior of the recess.

Alternatively, the implant anti-rotation means can be formed in a recess in the coronal end of the implant and the insertion tool may comprise a bolt at its distal end for insertion into the recess. In this embodiment the exterior surface of the bolt comprises one or more torque transmission surface and the interior of the recess comprises one or more anti-rotation surface.

The present invention is most efficient for embodiments in which the implant comprises at least two opposing anti-rotation surfaces and the insertion tool comprises at least two corresponding opposing torque transmission surfaces. This allows equal distribution of the applied force about the axes of the components.

Preferably, the implant comprises from two to six, more preferably from three to four, and most preferably four anti-rotation surfaces, allowing a very efficient and even transfer of torque.

Additionally or alternatively, it is preferred that the insertion tool comprises from two to six, more preferably from three to four, and most preferably four separate torque transmission surfaces.

In some embodiments not forming part of the present invention, the anti-rotation means of the implant and insertion tool may be arranged such that the improved transfer of torque provided is only achieved in a single rotational direction. The rotational direction can either be clockwise or counter-clockwise. In such situations, the implant can be inserted into the bone using the insertion tool but can not, or at least not easily, be removed using the same insertion tool. In such systems the anti-rotation surface and torque transmission surface are arranged such that only relative rotation in a predetermined direction brings the surfaces into maximum angular alignment. Rotation in the opposing direction may result in no contact or only edge-to-surface contact, as is achieved in the prior art. Therefore rotation in this direction does not result in as favourable force distribution as in the predetermined rotational direction.

According to the invention however, the insertion tool can transfer torque to the implant in both clockwise and anti-clockwise directions. In other words, one of the anti-rotation means comprises at least one force transmission surface and the other anti-rotation means comprises at least two force transmission surfaces, said surfaces being arranged such that, while the bolt is received in the recess, relative rotation in either direction results in at least one anti-rotation surface and at least one torque transmission surface being brought into maximum contact with each other, the angle between said anti-rotation and torque transmission surface being less in this position than in the first, non-torque transmission position.

This enables the advantages of the present invention to be obtained in either rotational direction and hence the position of the implant can be easily adjusted should initial insertion result in too deep a placement within the bone.

This feature could be achieved by designing an insertion tool and implant with equal numbers of force transmission surfaces, for example two, four or six, wherein a number of these surfaces are designed to come into maximum contact when the tool is rotated in a clockwise direction and the remaining surfaces being designed to come into maximum contact when the tool is rotated in an anti-clockwise direction. For example, the implant may comprise an anti-rotation means having six anti-rotation surfaces spaced at regular angular intervals, for use with an insertion tool comprising an anti-rotation means which has six torque transmission surfaces. The parts are designed such that three of the torque transmission surfaces are brought into contact with three anti-rotation surfaces when the insertion tool is rotated in a clockwise manner and the remaining three torque transmission surfaces and anti-rotation surfaces are brought into contact when the insertion tool is rotated in an anti-clockwise direction. It would also be possible for the implant and insertion tool to comprise an odd number of force transmission surfaces, in which case more surfaces would be brought in to maximum contact with each other when the tool is rotated in one direction.

In such examples neither the anti-rotation surfaces nor the torque transmission surfaces are all engaged in a torque transmitting manner at the same time.

According to the invention, however, one of the anti-rotation means comprises paired planar force transmission surfaces for co-operation with each planar force transmission surface of the other anti-rotation means. In other words, the insertion tool may have two torque transmission surfaces for co-operation with each anti-rotation surface of the implant or the implant may have two anti-rotation surfaces for co-operation with each torque transmission surface of the insertion tool. The term "force transmission surface" is used to refer in general to anti-rotation surfaces and torque transmission surfaces, in other words, the surfaces of the implant and insertion tool which in use engage one another to transmit torque between the two components.

"Paired force transmission surfaces" are those which, in use, engage the same force transmission surface for torque transmission in opposing directions. Therefore, a first of these paired planar force transmission surfaces is intended to cooperate with a planar force transmission surface of the other component when the insertion tool is rotated relative to the implant in a clockwise direction and a second of the paired planar force transmission surfaces is intended to cooperate with the same planar force transmission surface when the insertion tool is rotated relative to the implant in counter-clockwise direction. Thus, an improved contact area between the anti-rotation means is achieved for both rotational directions and hence for screwing the implant in both the apical and coronal direction. This is because, in contrast to the previous embodiment, either the all of the torque transmission or all of the anti-rotation surfaces will be engaged during torque transmission in both directions.

The terms "anti-rotation surface" and "torque transmission surface" as used in the context of the present invention relate to an anti-rotation surface or torque transmission surface, respectively, which is located in a single plane. As will be apparent from the figures, either of these force transmission surfaces may be discontinuous; i.e., two physically separate surfaces located in the same plane form a single anti-rotation or torque transmission surface.

With regard to the invention, either the implant has twice as many force transmission surfaces as the insertion tool or vice versa. Two of these force transmission surfaces can both be brought into maximum contact with the same force transmission surface of the other component by rotating the insertion tool while the bolt is received in the recess. As mentioned above these two force transmission surfaces are referred to as "paired surfaces". As it must be possible to bring each of the paired surfaces into contact with the same planar force transmission surface while the insertion tool and implant are connected it is desirable that the internal angle between these paired surfaces is kept to a maximum in order to limit the amount of rotational play needed between the implant and insertion tool. It is particularly preferred that the angle enclosed between the paired surfaces is at least 150°, preferably between 166° and 178° and more preferably between 170° and 178°. Depending on the design of the components, the paired surfaces may be adjacent to one another or separated by an intermediate surface. The arrangement of the paired surfaces is determined by the design and layout of the planar force transmission surfaces with which the paired surfaces are intended to co-operate with.

The insertion tool or implant preferably comprises from two to six, more preferably from three to four, and most preferably four force transmission surfaces. With the above described "paired surface" requirement, the other of the implant or insertion tool would comprise double the number of force transmission surfaces, e.g. from four to twelve, more preferably six to eight and most preferably eight. According to one preferred embodiment therefore, one of the implant and insertion tool comprises from two to six, more preferably from three to four, and most preferably four force transmission surfaces and the other of the implant and insertion tool comprises from four to twelve, more preferably six to eight and most preferably eight force transmission surfaces, said surfaces forming a number of paired surfaces.

As discussed in the introduction, it is common for prior art anti-rotation means to take the form of a polygon. In one embodiment of the present invention therefore each anti-rotation surface is positioned in a plane, the planes together defining a regular polygon. Alternatively each torque transmission surface can be positioned in a plane, the planes together defining a regular polygon.

In certain examples not forming part of the invention the cross sectional contour of the anti-rotation means will be formed entirely by the force transmission surfaces. Thus, the recess or bolt can have the cross-section of a regular polygon, e.g. square, triangular, hexagonal etc. However, in some instances the shape of the anti-rotation means, particularly the implant anti-rotation means, is not dictated solely by the force transmission surfaces. The implant must also enable an abutment or prosthesis to be securely attached. In addition, space restrictions within the patient's mouth mean that the implant diameter must be as narrow as possible while still providing the requisite strength. Therefore, according to the invention, the implant anti-rotation means has an irregular shape. This often results in the insertion tool anti-rotation means also requiring an irregular shape so that it can be connected to the implant. Therefore, according to the invention, although the overall cross-section of the anti-rotation means is not polygonal, the planes of the force transmission surfaces still define a polygon. For example, the implant anti-rotation means may comprise a square with rounded corners. Thus, although the cross section is not a regular polygon, the planar anti-rotation surfaces define a square and thus form a "functional polygon".

In this regard, in the context of the present invention, it is possible to define the "functional cross-section" of the anti-rotation means as the shape defined by the planes in which the force transmission surfaces are located, the force transmission surfaces being those which in use transmit torque between the implant and insertion tool.

Thus, according to the invention, the anti-rotation means of either the implant or insertion tool comprises a functional cross-section which defines a regular polygon. This polygon can be, for example, a rectangle, triangle, square, pentagon or hexagon. In one particularly preferred embodiment the anti-rotation means of the recess has a circular cross-section comprising four regularly spaced radially inwardly protruding projections, the distal planar surfaces of said projections forming force transmission surfaces and defining a square.

While, according to the invention, the functional cross section of one of the anti-rotation means defines a regular polygon the anti-rotation means of the other of the implant and insertion tool comprises a functional cross section which defines an irregular polygon.
When the assembly of the present invention is intended to provide torque transmission in both rotational directions, there exists, on one of the anti-rotation means, a first "set" of force transmission surfaces intended to cooperate with at least some of the planar force transmission surfaces of the other component when the insertion tool is rotated relative to the implant in a clockwise direction and a second "set" of force transmission surfaces intended to cooperate with at least some of the force transmission surfaces of the other component when the insertion tool is rotated relative to the implant in a counter-clockwise direction. The functional cross-section of each set preferably defines a regular polygon, these polygons being co-axial but rotationally offset from one another. Although the functional cross section of each set as described herein has the shape of a regular polygon, the functional cross section of the combined sets, and thus the functional cross-section of the anti-rotation means is an irregular polygon.
In some embodiments, the polygon defined by each set is different to the polygon defined by the force transmission surfaces of the other component. More particularly, the regular polygon of each set has fewer sides than, preferably half, the polygon of the other component. Therefore, when the insertion tool and implant are rotated relative to one another neither the anti-rotation surfaces nor the torque transmission surfaces are all engaged in a torque transmitting manner at the same time.
However, it is particularly preferred that the functional cross-section of each set is identical to the functional cross-section defined by the planar force transmission surfaces of the co-operating component. This can be achieved by providing one component with paired force transmission surfaces, each pair of surfaces comprising one surface from each set.

Therefore, according to the invention, the anti-rotation means of either the implant or insertion tool comprises a functional cross-section which defines a regular polygon and the anti-rotation means of the other of the implant and anti-rotation means comprises a functional cross section defining an irregular polygon. Preferably the irregular polygon is defined by two sets of planar force transmission surfaces, the first set being arranged to cooperate with the force transmission surfaces of the other component when the insertion tool is rotated relative to the implant in a clockwise direction and the second set being arranged to cooperate with the force transmission surfaces of the other component when the insertion tool is rotated relative to the implant in a counter-clockwise direction, each set of planer surfaces defining a regular polygon, the polygons being coaxial but rotationally offset from one another.
In particular, the regular polygon defined by the functional cross-section of each set is preferably a triangle, a square, a pentagon, a hexagon, a heptagon or an octagon, more particularly a square, pentagon or hexagon, and most particularly a square.
As the skilled man will appreciate, the anti-rotation means of both the implant and insertion tool can be designed in many alternative ways which enable the present invention to be realised. When designing the component parts, the most important consideration is the creation of as big a leverage as possible but with a contact surface area great enough to avoid deformation.

In order to avoid deformation, the contact surface area between the implant and insertion tool must be great enough that the stress created by the force exerted on this surface area in use is less than the yield stress of the material. The necessary surface area will be determined by many factors including the material, geometry, forces etc of the individual system. Once the minimum required surface area is determined, usually via computer modelling, the rotational angle required to move the surface between the first, offset, and second, maximum contact, position should be chosen to be the smallest angle which enables the required surface area to be achieved. Keeping this angle small maximises leverage and minimises the rotational play between the tool and implant.

The required surface area and angle will vary greatly depending on the characteristics of the system.

When the anti-rotation means of either the implant or insertion tool has a functional cross section defining a regular polygon, it is preferred that in the non-torque transmission position the angle between the anti-rotation surface and the torque transmission surface is less than x/2, where x is the angle of rotational symmetry of the regular polygon. Thus, a large enough surface area between torque transmission and anti-rotation surface can be achieved while maintaining a large leverage.

More generally, it is preferred that in the first, non-torque transmission, position the angle between the anti-rotation surface and the torque transmission surface is less than 15°, more preferably between 1° and 7°, and most preferably between 2° and 5°.

The first, non-torque transmission position is defined as the position in which all of the anti-rotation surfaces are at an equal distance from the torque transmission surfaces. Therefore, in embodiments in which torque transmission in either direction is possible, the non-torque transmission position is considered to be the "middle" position, in which both sets of force transmission surfaces are equally removed from their maximum contact, torque transmission position.

As will be described in more detail below, the shaping of the anti-rotation means can be conceptualised in the following way. Initially the anti-rotation means have the same functional cross-section, with the bolt being dimensioned to fit within the recess. Then, either the bolt or the recess is rotated relative to the other component. For the purposes of this example the recess and bolt can be said to have the functional cross section of a square with the bolt being rotated relative to the recess. As the bolt is rotated, it will come into edge-to-surface contact with the walls of the recess. In reality, this is the position at which a bolt shaped in this manner would stop rotating relative to the recess and begin to transmit torque. However, in the current visualisation method the bolt continues to rotate into the recess walls.

As the bolt is rotated further, the corners of the bolt will overlap the recess, and form areas of intersection at the recess walls. As the bolt continues to be rotated, this area will increase in size and the location of the intersection will move towards the centre of the recess wall, hence reducing the leverage. When the bolt has been rotated far enough for the intersection area to equal the calculated surface area required to prevent deformation the rotation is stopped. The parts of the bolt overlapping the recess are removed, thus creating a square having chamfered sides. The bolt can then be rotated in the opposite direction and the process repeated in order to obtain paired surfaces and enable torque transfer in both directions.

In another conceptualisation method the corners of the bolt can be imagined to be ground down at they come into contact with the recess walls, until a suitable area of force transmission surface has been achieved. In both examples it is also possible for the sections of recess wall which are overlapped by the bolt to be removed, such that the bolt retains a square cross-section and the recess takes on an irregular shape resembling a square with widened corners.

When it is the sides of the bolt that are chamfered in order to enable rotation within the recess, the result of the above design procedure is an irregular polygon formed from a base regular polygon, wherein each side of the base regular polygon is chamfered such that each side in effect comprises three planar surfaces; the central surface which forms the remainder of the base polygonal side and two angled chamfer surfaces on either side of the central surface which form the anti-rotation or torque transmission paired surfaces.

Therefore, in one embodiment it is preferred that the cross-sectional contour of the bolt has the base form of a polygon corresponding to the cross-sectional functional contour of the recess with smaller dimensions, the sides of the bolt being chamfered such that each chamfer forms a force transmission surface. Thus, an assembly according to the present invention can be achieved by simple machining of a bolt of a conventional system, in which the recess and the bolt are shaped correspondingly. Preferably the base polygon from which the bolt is formed is a square.

When the functional cross-section of the bolt defines an irregular polygon the functional cross-sectional contour of the recess defines a regular polygon, each side of the regular polygon forming a planar force transmission surface.

Although the actual cross-sectional contour of the recess could, in embodiments not forming part of the present invention, form a regular polygon, often other design requirements must be taken into account which affect the overall shape of the recess. In this regard, it is preferred that each planar force transmission surface of the recess comprises a central cutout.

This negates the need for the bolt to comprise a central "flat" surface. Instead the two paired surfaces can converge and form a central peak which in use is accommodated within the cut out. As the number of surfaces of the bolt is reduced, this in turn reduces the machining time and complexity. In addition the slight increase in volume strengthens the bolt.

Alternatively, the recess may comprise the paired surfaces and the bolt the central cut outs, such that a central peak of the recess walls can extend into the cut out.

More generally therefore, it is preferred that, when one of the implant and insertion tool comprises paired force transmission surfaces, the other of the implant and insertion tool comprises central cut outs in each force transmission surface. Preferably each of the paired force transmission surfaces converge to form, a central peak which, when the bolt is received in the recess, is located within a cutout.

According to a particularly preferred embodiment, the functional cross-sectional contour of the recess has the form of a square and the cross-sectional contour of the bolt has the base form of a square, the sides of the bolt being chamfered so as to form paired force transmission surfaces. The bolt therefore comprises a functional cross-section defining an irregular polygon, the irregular polygon being formed by two coaxial but angularly offset squares. The internal angle enclosed between each of the paired surfaces is preferably between 150° to 178°. This equates to each paired surface having a chamfer angle of between 1° and 15°. More preferably this angle is between 2° to 7°, resulting in an internal angle of between 166° and 176°. Most preferably this angle is between 3° and 4°, resulting in an internal angle of between 172° and 174°. However as discussed above the preferred angles are highly dependent on the material of the components and forces within the system. Preferably the paired surfaces are adjacent, e.g. they converge to form a central peak on the bolt surface.

In analogy to the above mentioned embodiment, in which the functional cross-sectional contour of the recess has the form of a regular polygon, it is according to an alternative embodiment preferred that the functional cross-sectional contour of the bolt has the form of a regular polygon, each side of the bolt forming a separate planar surface.

In this embodiment it is further preferred that the cross-sectional contour of the recess has the base form of a polygon corresponding to the cross-sectional contour of the bolt with greater dimensions, the corners of the recess being recessed by a cavity, such that the opposing inner surfaces of each cavity form anti-rotation or torque transmission surfaces. In this embodiment the separate planar surfaces of the bolt may comprise a central cut out.

The provision of cut outs in either the insertion tool or implant demonstrates that an anti-rotation or torque transmission surface can be discontinuous, i.e. the surface is broken by the cut out, while still forming a single force transmission surface in the context of the present invention as each section of the surface is located in the same plane. In addition, although the cutouts alter the overall cross-section of the anti-rotation means, the functional cross section remains unchanged as this functional cross section is defined only by the force transmission surfaces, namely those which in use transfer torque between the components.

As discussed above, the present invention both encompasses embodiments in which the bolt is formed by the dental implant and the recess is formed by the insertion tool and *vice versa.* In particular, the invention relates to embodiments in which the insertion tool comprises at its distal end a bolt, which is inserted into a recess of the implant. However, the invention can also be applied to systems in which the insertion tool is placed over a protruding boss of the implant, said boss forming a bolt within the meaning of the present invention.

According to a further aspect an insertion tool for inserting a dental implant into the bone is disclosed, the insertion tool comprising: a proximal end; a distal end comprising an anti-rotation means having a non-circular cross-section which comprises a plurality of planar torque transmission surfaces and has the base form of a polygon, each side of the polygon being chamfered to form two paired planar torque transmission surfaces.
The internal angle enclosed by the paired surfaces is preferably within the ranges previously described. In addition the paired surfaces preferably converge to form a central peak. The corners of the anti-rotation means can be rounded and the base polygon may be a square.
According to another aspect the present invention comprises an insertion tool for inserting a dental implant into the bone, the insertion tool comprising a distal end for insertion into a recess in the coronal end of the implant, the shape of the distal end being designed in accordance with a method comprising the steps of; creating an initial cross section that mirrors the cross-section of the implant recess; rotating the cross section of the distal end such that this overlaps the cross-section of the recess and forms areas of intersection between the cross-sections; when the areas of intersection reach a pre-determined size, stopping rotation and altering the cross section of the distal end to remove the sections which overlap the cross section of the recess, thus forming one set of chamfered force transmission surfaces; rotating the cross section of the distal end in the opposite direction such that this overlaps the cross-section of the recess and forms new areas of intersection between the cross-sections; when the areas of intersection reach a pre-determined size, stopping rotation and altering the cross section of the distal end to remove the sections which overlap the cross section of the recess, thus forming a second set of chamfered force tranasmission surfaces; repeating this procedure if necessary until each chamfered surface has the pre-determined surface area. Preferred embodiments of the present invention shall now be described, by way of example only, with reference to the accompanying drawings, in which:
Fig. 1 is a cross-sectional view of an assembly of a dental implant and an insertion tool according to the state of the art, the assembly being shown in a first, non-torque transmission position (a) and a second, torque transmission position (b);
Fig. 2 is a cross-sectional view of an assembly not forming part of the present invention, the assembly being shown in a first, non-torque transmission position (a) and a second, torque transmission position (b);
Fig. 3 is a cross-sectional view of a further example of the assembly not forming part of the present invention, the assembly being shown in a first, non-torque transmission position (a) and a second, torque transmission position (b);
Fig. 4 is a cross-sectional view of a further example of the assembly not forming part of the present invention, the assembly being shown in a first, non-torque transmission position (a) and a second, torque transmission position (b);
Fig. 5 is a cross-sectional view of a further example of the assembly not forming part of the present invention, the assembly being shown in a first, non-torque transmission position (a) and a second, torque transmission position (b);
Fig. 6 is a cross-sectional view of an assembly according to the present invention, the assembly being shown in a first, non-torque transmission position;
Fig. 6A shows a detail X of Fig. 6;
Fig. 7 is a cross-sectional view of a further example of the assembly not forming part of the present invention, comprising an identical recess to Fig. 6 but in combination with an alternative bolt;
Fig. 7A shows a detail X of Fig. 7
Fig. 8 is a cross-sectional view of a further example of the assembly not forming part of the present invention, with the bolt having the cross-sectional contour of a square; and
Fig. 9 shows a schematic cross-sectional view of another example of the assembly not forming part of the present invention.

As discussed above, conventional insertion tools have at their distal end an anti-rotation means, which has a shape corresponding to the shape of the anti-rotation means of the implants with which they are intended for use.

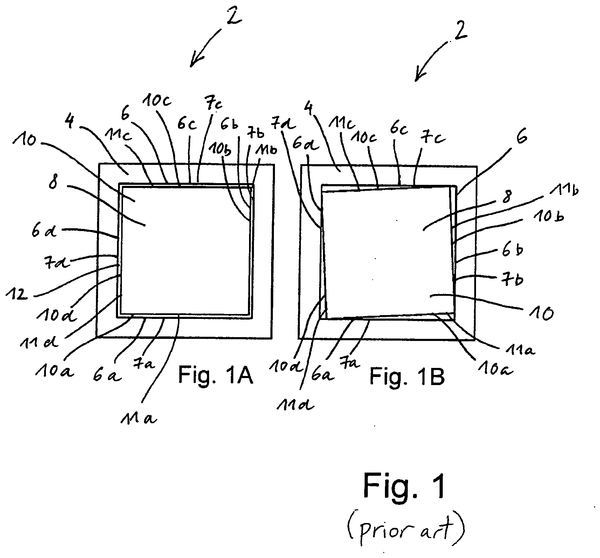

This is exemplified schematically by Fig. 1. This shows an assembly 2, having an anti-rotation means 4 in the form of a recess 6 and a second anti-rotation means 8 in the form of a bolt 10. Both anti-rotation means 4, 8 have the cross-sectional contour of a square. Either the recess 6 or the bolt 10 could form the anti-rotation means of an implant, with the other anti-rotation means forming the distal end of an insertion tool which can be placed into or over the implant.

Each of the four sides 6a, 6b, 6c, 6d of the recess 6 forms a force transmission surface and each of the four sides 10a, 10b, 10c, 10d of the bolt 10 also forms a force transmission surface. For distinction, the force transmission surfaces of the implant are referred to as anti-rotation surfaces and the force transmission surfaces of the insertion tool are referred to as torque transmission surfaces. It is possible for the anti-rotation means of the implant to be formed by the recess 6 or the bolt 10 and thus also for either of these components to form the anti-rotation means of the insertion tool. Therefore sides 6a, 6b, 6c, 6d and 10a, 10b, 10c, 10d can be either anti-rotation or torque transmission surfaces.

For the purposes of the present example however, recess 6 is considered to be formed in the implant and therefore the sides 6a, 6b, 6c, 6d form anti-rotation surfaces 7a, 7b, 7c, 7d while the insertion tool forms the bolt 10 and thus sides 10a, 10b, 10c, 10d form torque transmission surfaces 11a, 11b, 11c, 11d. These surfaces 11a, 11b, 11c, 11d are intended to cooperate with the corresponding anti-rotation surface 7a, 7b, 7c, 7d, respectively, to transmit torque between the components.
In order to enable insertion of the bolt 10 into the recess 6, the dimensions of the bolt 10 must be slightly smaller than those of the recess 6. As shown in Fig. 1a, which in essence represents the position of the anti-rotation means 4, 8 during insertion, there is a small gap 12 between the parts 6, 10 and thus a certain degree of rotational play due to the difference in dimensions.
It can be seen from this example that the anti-rotation surfaces 7a, 7b, 7c, 7d lie in parallel to the respective torque transmission surfaces 11a, 11b, 11c, 11d, in a non-torque transmitting position, when a gap 12 exists between the bolt and the recess. As the bolt is rotated into maximum contact with the recess, and thus into a torque transmitting position, shown in Fig 1B, the angle between the anti-rotation surfaces 7a, 7b, 7c, 7d and the torque transmission surfaces 11a, 11b, 11c, 11d increases. Relative rotation between the bolt 10 and the recess 6 thus leads to an edge-to-face contact, as shown in Fig. 1b. This concentrates the applied force over a small area and can lead to local deformation of both the implant and insertion tool.

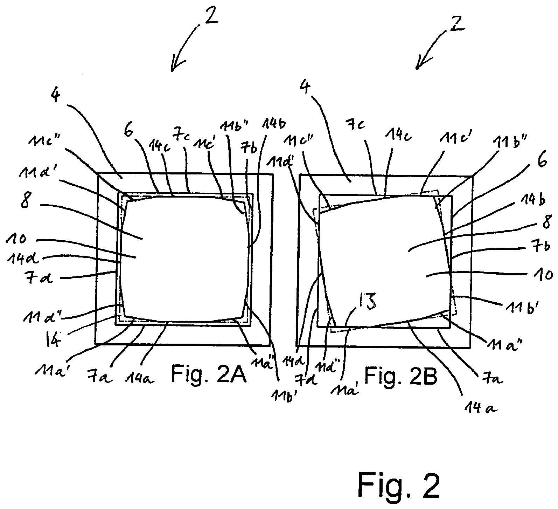

Fig. 2 shows an assembly in which the recess 6 has the same cross-sectional contour as in Fig. 1, but with a differently shaped bolt 10. Again, in this example, recess 6 is considered as forming the anti-rotation means of the implant, and the bolt 10 as the anti-rotation means of the insertion tool.

The cross-sectional contour of the bolt 10 has the form of a square with chamfered edges. More particularly, the chamfering of the edges is such that each anti-rotation surface 7a, 7b, 7c, 7d of the recess 6 is facing two planar chamfers, each of these chamfers forming a torque transmission surface 11a', 11a'', 11b', 11b'', 11c', 11c", 11d', 11d".

The two torque transmission surfaces facing the same anti-rotation surface 7a, 7b, 7c, 7d are referred to collectively as paired surfaces 11a', 11a"; 11b', 11b"; 11c', 11c'' and 11d', 11d''. When the bolt 10 is rotated in the anti-clockwise direction, one torque transmission surface 11a', 11b', 11c', 11d' from each pair is brought into maximum contact with the anti-rotation surfaces 7a, 7b, 7c, 7d for the transmission of torque. When the bolt is rotated in the clockwise direction the other torque transmission surface 11a'', 11b'', 11c'', 11d'' of each pair is brought into contact with the anti-rotation surfaces 7a, 7b, 7c, 7d in order to enable torque to be transmitted in the opposite direction.

Fig. 2A shows the anti-rotation means 4, 8 in a non-torque transmitting position, when all the torque transmission surfaces 11a', 11a"; 11b', 11b"; 11c', 11c" and 11d', 11d'' have minimal or no contact with the anti-rotation surfaces 7a, 7b, 7c, 7d. In this position the torque transmission surfaces 11a', 11a''; 11b', 11b"; 11c', 11c'' and 11d', 11d" are angled with respect to the anti-rotation surfaces 7a, 7b, 7c, 7d by around 3°. As the torque transmission surfaces 11a', 11b', 11c', 11d' are rotated into maximum, torque transmitting contact, shown in Fig. 2B, the angle between the torque transmission surfaces 11a', 11b', 11c', 11d' and the anti-rotation surfaces 7a, 7b, 7c, 7d decreases and is ideally eliminated such that full surface to surface contact is achieved. In the same way, the angle between the second set of torque transmission surfaces 11a'', 11b'', 11c'', 11d'' and the anti-rotation surfaces 7a, 7b, 7c, 7d is eliminated or substantially eliminated when these surfaces are rotated into maximum contact with the recess 6.

Therefore, in accordance with the present invention the rotational play between the implant and insertion tool is used to bring the torque transmission surfaces and anti-rotation surfaces into alignment. The minimum angle between the surfaces is thus achieved in the torque transmission position as opposed to, as is the case in the prior art, when the surfaces are in a non-torque transmission position.

This is achieved by providing the anti-rotation surfaces 7a, 7b, 7c, 7d and torque transmission surfaces 11a', 11a", 11b', 11b", 11c', 11c", 11d', 11d" with different, non-matching profiles. Although these surfaces can be aligned with one another in order to transmit torque, these do not exactly mirror one another. This enables a greater degree of rotational play of the bolt 10 within the recess 6 which can be used to align the force transmission surfaces.

The cross-section of the bolt can be determined in the following manner. A provisional cross-section 14 of a standard anti-rotation means is provided (shown in Fig. 2 in dotted lines). This cross section 14 mirrors the cross section of the recess 6, in the same manner as prior art systems (see Fig. 1). This cross-section 14 is rotated such that it overlaps the cross-section of the recess 6. When the surface area at the interfaces 13 between the recess 6 and the bolt 10 defined by the provisional cross-section 14 reaches the predetermined amount necessary to prevent deformation, these interfaces 13 define the chamfered surface planes that will form one set of torque transmission surfaces 11a', 11b', 11c', 11d'. The bolt 10 is then rotated in the opposite direction to define the second set of torque transmission surfaces 11a", 11b", 11c", 11d". As will be appreciated, the surface area of the interface 13 and hence the torque transmission surfaces 11a', 11b', 11c', 11d' will be reduced by the creation of the second set of torque transmission surfaces 11a", 11b", 11c", 11d" and therefore this must be taken into account when determining when the interface area is suitably sized. If necessary the rotation of the bolt 10 can be repeated in order to gradually "whittle down" the chamfered sides until the necessary surface area 13 has been reached. This type of design process can be carried out on a computer model of the system, which can also be used to calculate the minimum contact surface area necessary during torque transmission in order to prevent deformation. This calculation takes into account many system specific characteristics, such as material strength, applied force etc.

In a similar manner to that described above, the recess shape can similarly be adjusted to contain paired anti-rotation surfaces, as will be shown in a later embodiment.

The paired torque transmission surfaces 11a', 11a"; 11b', 11b"; 11c', 11c" and 11d', 11d" are arranged in axial symmetry and the degree of rotational symmetry of the bolt is 90°. The four torque transmission surfaces of the first set 11a', 11b', 11c', 11d' and of the second set 11a", 11b", 11c", 11d", are thus arranged regularly at an angle of 90° about the rotational axis of the bolt.

A non-chamfered side area 14a, 14b, 14c, 14d is located between the chamfers and forms the remainder of the base polygonal cross-section 14. The insertion tool thus has three surfaces that can be brought into alignment with each single anti-rotation surface 7a, 7b, 7c, 7d. Two of these, namely the chamfered surfaces, form torque transmission surfaces 11a', 11a", 11b', 11b", 11c', 11c'', 11d', 11d" and co-operate with the anti-rotation surfaces 7a, 7b, 7c, 7d in order to transmit torque between the components. The non-chamfered side areas 14a, 14b, 14c, 14d are not involved in torque transmission and therefore do not form force transmission surfaces. When these surfaces 14a, 14b, 14c, 14d are aligned with the anti-rotation surfaces 7a, 7b, 7c, 7d there is no contact between the force transmission surfaces of the implant and insertion tool and all the torque transmission surfaces 11a', 11a", 11b', 11b", 11c', 11c", 11d', 11d" are equally distant from the anti-rotation surfaces 7a, 7b, 7c, 7d. Thus this position is said to be the first, non-torque transmitting position, and is shown in Fig. 2A.

The four torque transmission surfaces of the first set 11a', 11b', 11c', 11d' and of the second set 11a", 11b", 11c", 11d", each define a "functional cross section" having the shape of a square corresponding in shape and dimensions to the cross-sectional contour of the recess 6. Thus, although the width of the bolt 10 is still less than the width of the recess 6, as in the assembly according to Fig. 1, a length equal to the width of the recess 6 is achieved between opposing torque transmission surfaces 11a' , 11c' and 11b', 11d', respectively.
The overall functional cross-section of the bolt 10, which is defined by all of the torque transmission surfaces 11a', 11a", 11b', 11b", 11c', 11c", 11d', 11d" forms an irregular polygon.
The internal angle between the two paired torque transmission surfaces 11a', 11a"; 11b', 11b"; 11c', 11c" and 11d', 11d" is, in this example, 174°. This equates to each planar torque transmission surface having an angle of 3° from the respective side area 14a, 14b, 14c, 14d.
Due to the improved surface-to-surface contact between the torque transmission surface and the anti-rotation surface, the force distribution between the anti-rotation means 4, 8 is optimized and the risk of deformation of any of the parts is greatly diminished.

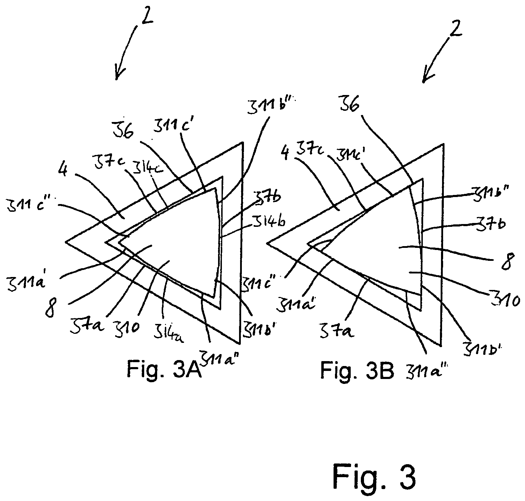

In the example of Fig 2, torque can be applied in both a clockwise and anti-clockwise direction due to the presence of two paired torque transmission surfaces per anti-rotation surface. Of course, alternative constructions are possible which are designed to transmit torque in a single direction. In these, only one torque transmission surface is provided per anti-rotation surface. For example, bolt 10 may comprise only a single set of torque transmission surfaces 11a', 11b', 11c', 11d'.
An alternative assembly is shown in Fig. 3. In this assembly the recess 36 has anti-rotation surfaces 37a, 37b, 37c which define a triangle. In analogy to the example shown Fig. 2, the sides of the bolt 310 of Fig. 3 are chamfered, such that each anti-rotation surface 37a, 37b, 37c of the recess 36 is aligned with two planar chamfers, each of which forming a planar torque transmission surface 311a', 311a''; 311b', 311b"; 311c', 311c", with side areas 314a, 314b, 314c, arranged between the chamfers.
The assembly according to Fig. 3 thus also comprises a first set of torque transmission surfaces 311a', 311b', 311c' intended to transmit torque when bolt 310 is rotated in respect to the recess 36 in a counter-clockwise direction, and a second set of torque transmission surfaces 311a'', 311b'', 311c'' intended to transmit torque when the bolt 310 is rotated in respect to the recess 36 in a clockwise direction. The paired torque transmission surfaces 311a' , 311a"; 311b', 311b"; 311c' , 311c'' are arranged in axial symmetry and the degree of rotational symmetry of the bolt 310 is 120°.
The planes in which the torque transmission surfaces of each of the two sets 311a', 311b', 311c'; 311", 311b", 311c" are positioned define a triangle corresponding in its dimensions to the cross-sectional contour of the recess 36, with the overall functional cross-section of the torque transmission surfaces 311a', 311a", 311b', 311b", 311c', 311c" defining an irregular polygon.
When twisting the insertion tool in order to screw the dental implant, the torque transmission surfaces of one set 311a', 311b', 311c' are brought from the first, non-torque transmitting position shown in Fig. 3a, to a second, torque transmitting position shown in Fig. 3b. Thereby, the angle between the anti-rotation surfaces 37a, 37b, 37c and the respective torque transmission surfaces 311a', 311b', 311c' is eliminated and the torque transmission surfaces 311a', 311b', 311c' come into planar contact with the respective anti-rotation surface 37a, 37b, 37c.

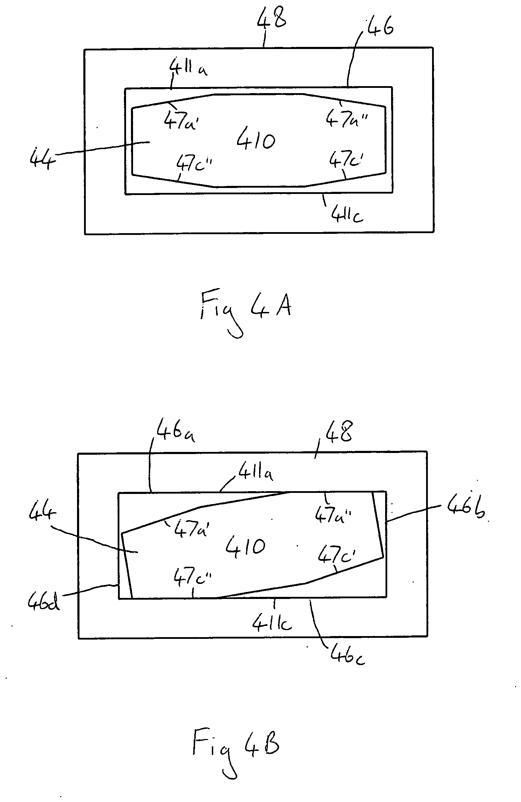

In the example shown in Fig. 4, the cross-sectional contour of the recess 46 has the shape of a rectangle. As is apparent from Fig. 4b, torque is only transmitted via the inner surface corresponding to the long sides 46a, 46c of the rectangle; the recess 46 thus has only two force transmission surfaces. In this example the recess 46 is considered to be formed on the distal end of the insertion tool and hence sides 46a, 46b form torque transmission surfaces 411a, 411c.
The bolt 410 forms a boss on the coronal end of an implant and has a cross-section with slightly smaller dimensions than the cross-sectional contour of the recess 46. The sides of the bolt 410 are chamfered such that each of the two opposing torque transmission surfaces 411a, 411c of the recess 46 are facing paired anti-rotation surfaces 47a', 47a"; 47c', 47c" of the bolt 410. One surface 47a', 47c' of each pair is intended to cooperate with the respective torque transmission surface 411a, 411c when the anti-rotation means 48 is rotated relative to the anti-rotation means 44 in an anti-clockwise direction, and the other surface 47a", 47c" of each pair is intended to cooperate with the respective torque transmission surface 411a, 411c when the anti-rotation means 48 is rotated relative to the anti-rotation means 44 in a clockwise direction.
The anti-rotation surfaces 47a', 47a"; 47c', 41c" can be brought from the first, non-torque transmission position shown in Fig. 4a, to a second, torque transmission position shown in Fig. 4b by twisting the insertion tool in respect to the implant, thereby eliminating the angle between the torque transmission surfaces 411a, 411c and the one set of anti-rotation surfaces 47a', 47c'; 47a", 47c".
In a similar manner to that described in relation to Fig. 1, the shape of the bolt 410 can be arrived at by starting with a base rectangular shape that mirrors the contour of the recess 46 and chamfering the edges in order to achieve a suitable contact surface area.

In analogy to the examples shown in Figs. 2, 3 and 4, a recess having a cross-sectional contour of another regular polygon, e.g. a pentagon or a hexagon is likewise possible.

In the examples above the recess of one of the anti-rotation means has the cross-sectional shape of a regular polygon. As discussed previously however in some systems it is not desireable for the anti-rotation means as a whole to have such a shape. Therefore, other shapes can be ultilised, while still providing force transmission surfaces having a "functional cross section" which defines a regular polygon. This is demonstrated in the following examples.

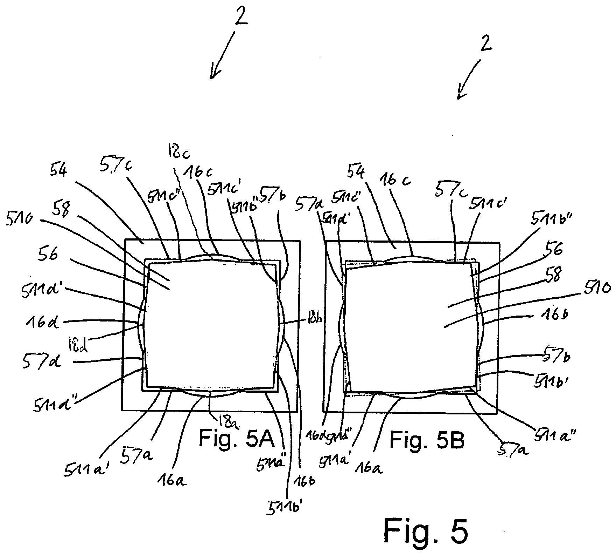

In the example according to Fig. 5, the cross-sectional contour of the recess 56 has the same cross-section as the example according to Fig. 2, but with the four sides of the recess additionally comprising a central cutout 16a, 16b, 16c, 16d. The cutouts are curved and are positioned along the outline of a circle, the centre of the circle coinciding with the centre of the square. However, other cut out shapes can be used.

These cutouts 16a, 16b, 16c, 16d result in the cross section of the recess 56 being non-polygonal. Despite the cut outs however, recess 56 still comprises four planar anti-rotation surfaces 57a, 57b, 57c, 57d, as the two parts of each surface lie in the same plane. Thus, for the purposes of the present invention these surfaces, although separated by a cut out 16a, 16b, 16c, 16d, can be said to form single anti-rotation surfaces 57a, 57b, 57c, 57d. The planes of anti-rotation surfaces 57a, 57b, 57c, 57d define a regular polygon, in this case a square. Therefore, the recess 56 of Fig. 5 has the same "functional cross-section" as recess 6 of Fig. 2.

As in previous examples, each anti-rotation surface is faced by two paired torque transmission surfaces 511a', 511a"; 511b', 511b"; 511c', 511c" and 511d', 511d" that are angled with respect to each other. A first surface 511a', 511b', 511c', 511d' of each pair is intended to cooperate with the respective anti-rotation surface 57a, 57b, 57c, 57d by rotating the second anti-rotation means 58 relative to the first anti-rotation means 54 in an anti-clockwise direction and a second surface of each pair 511a", 511b", 511c", 511d" being intended to cooperate with the anti-rotation surfaces 57a, 57b, 57c, 57d by rotating the second anti-rotation means 58 relative to the first anti-rotation means 54 in a clockwise direction. When each torque transmission surface is rotated into maximum, torque transmitting contact with the anti-rotation surface, the angle between these components is at its minimum and is preferably eliminated.

In comparison to the example shown in Fig. 2, the bolt 510 is shaped differently in that the paired torque transmission surfaces 511a', 511a"; 511b', 511b"; 511c', 511c" and 511d', S11d" are adjacent to each other without an intermediate area arranged in between. This is due to the shape of the recess 56, which enables the peaks 18a, 18b, 18c, 18d formed by the converging torque transmission surfaces 511a', 511a"; 511b', 511b"; 511c', 511c" and 511d', 511d" to extend into the cutouts 16a, 16b, 16c, 16d. This ability of the peaks 18a, 18b, 18c, 18d to be accommodated within the cutouts 16a, 16b, 16c, 16d enables the volume of the bolt 610 to be slightly increased, thus increasing its strength. In addition the cross sectional contour of the bolt 510 is simplified, leading to easier manufacturing.

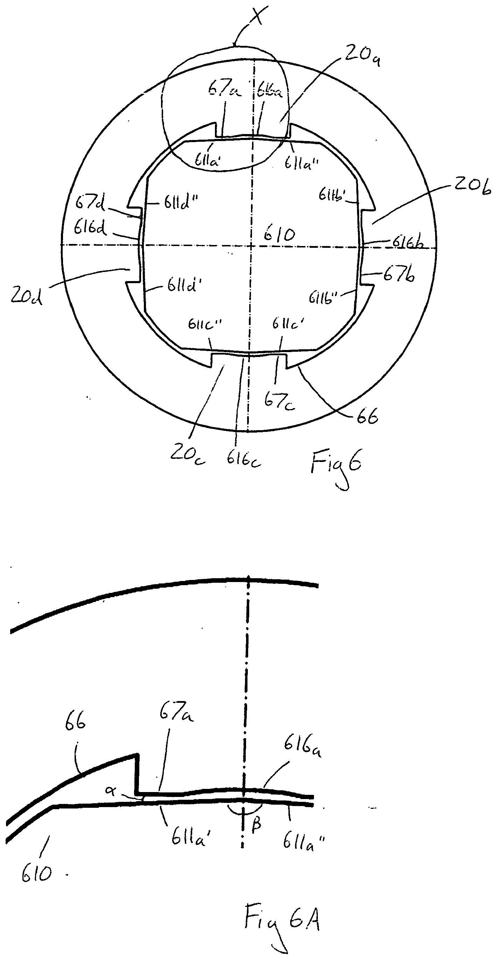

The above examples provide schematic representations of cross sections of the anti-rotation means of an implant and abutment. However, it should be noted that these examples are used only to demonstrate various possible shapes of the inner recess cross-section and the outer cross-section of the bolt, in other words, the two cross sections on which the force transmission surfaces are formed. These schematic representations are not intended to accurately portray other features of the implant and insertion tool system. In particular, when the recess 6, 36, 46, 56 is formed along the longitudinal axis of an implant, the external cross section of the implant will be generally circular cylindrical, such that this can be screwed into the bone.
In the embodiment shown in Fig. 6, the circular cylindrical recess 66 has four radially inwardly extending protrusions 20a, 20b, 20c, 20d. The front surfaces of these protrusions 20a, 20b, 20c, 20d each form an anti-rotation surface 67a, 67b, 67c, 67d. A central cutout 616a, 616b, 616c, 616d breaks each anti-rotation surface in two, however as discussed above, as these two halves are found in the same plane these are considered to form a single force transmission surface. The cutouts 616a, 616b, 616c, 616d are curved and are positioned along the outline of a circle, the centre of the circle coinciding with the centre of the recess 66.

The cross-sectional contour of the bolt 610 has the basic form of a square. However, in this embodiment the corners of the bolt 610 have been rounded in order to fit within the circular recess 66. In accordance with the present invention, each side of the basic square form has been chamfered so as to create paired torque transmission surfaces 611a', 611a"; 611b', 611b''; 611c', 611c'' and 611d', 611d". Therefore, the functional cross section defined by these torque transmission surfaces 611a', 611a"; 611b', 611b''; 611c', 611c" and 611d', 611d" is an irregular polygon. The chamfered nature of the torque transmission surfaces can be more clearly seen in Fig. 6A.

The torque transmission surfaces can be separated in two sets, wherein each pair of torque transmission surfaces comprises a surface from each set. A first set of torque transmission surfaces 611a', 611b', 611c', 611d' come into torque transmitting contact with the anti-rotation surfaces 67a, 67b, 67c, 67d when the bolt 610 is rotated in a clockwise direction relative to the recess 66. The second set of torque transmission surfaces 611a", 611b'', 611c", 611d" come into torque transmitting contact with the anti-rotation surfaces 67a, 67b, 67c, 67d when the bolt 610 is rotated in an anti-clockwise direction relative to the recess 66. Thus, the bolt 610 can be used to transfer torque in both directions. Further, when each torque transmission surface is in maximum, torque transmitting contact with an anti-rotation surface, the angle between these two surfaces is at its minimum.

Although the functional cross-section of the bolt 610 is irregular, each set of torque transmission surfaces 611a', 611b', 611c', 611d' and 611a", 611b", 611c", 611d" define a square having the same dimensions as the functional cross section of the recess 66 (which is defined by the anti-rotation surfaces 67a, 67b, 67c, 67d). The two square cross-sections defined by the sets of torque transmission surfaces 611a', 611b', 611c', 611d' and 611a'', 611b", 611c'', 611d" are co-axial but rotationally offset from one another.

The surfaces of each pair of torque transmission surfaces 611a', 611a''; 611b', 611b''; 611c', 611c" and 611d', 611d" are adjacent to each other and form an internal angle β of approximately 174°. In other words each torque transmission surface 611a', 611a'', 611b', 611b'', 611c', 611c", 611d', 611d" has an angle α of 3° from the horizontal and 3° from the facing anti-rotation surface 67a, 67b, 67c, 67d when the torque transmission surfaces are in the first, non-torque transmission position (as shown in Fig. 6A).

Despite the difference in the overall cross-sections of the recess 66 and bolt 610, it can be seen that the functional cross-sections of these components of Fig. 6 are in fact identical to the functional cross-sections of the parts shown in Fig. 5.

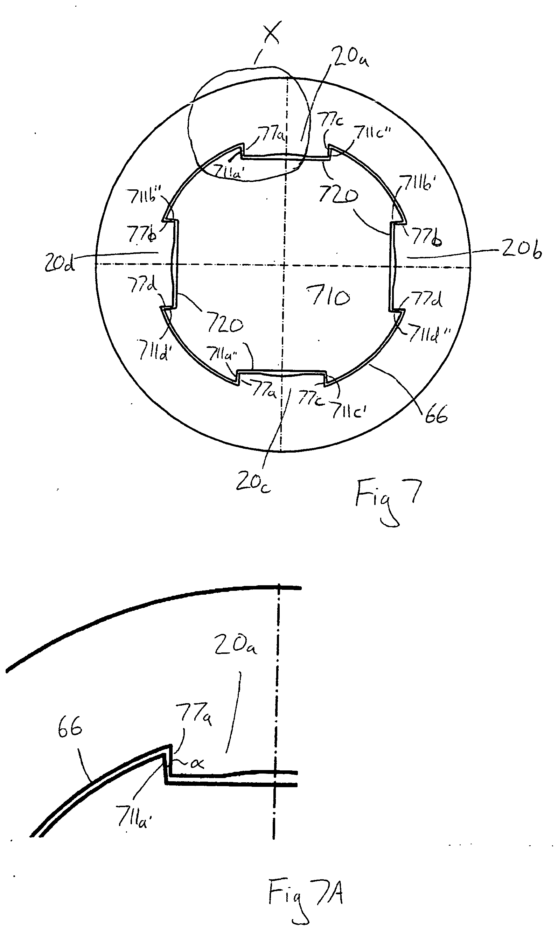

The surfaces of the implant and insertion tool which define the functional cross-section of the anti-rotation means are determined by the interaction between the components. Fig. 7 shows an alternative example in which the recess 66 is identical to that of Fig. 6. In this case however the bolt 710 has a cross-sectional shape which is very similar in cross-section to that of the recess 66. Bolt 710 has a generally circular cross section comprising four grooves 720 spaced at regular intervals about the longitudinal axis and within which the protrusions 20a, 20b, 20c, 20d of the recess 66 can be accommodated. In this example, when the bolt is rotated relative to the recess it is the lateral sides of the grooves that first contact the protrusions 20a, 20b, 20c, 20d and hence these sides form the torque transmission surfaces 711a', 711a'', 711b', 711b", 711c', 711c", 711d' , 711d" . Consequently it is the lateral sides of the protrusions 20a, 20b, 20c, 20d, and not the front surfaces, that form the anti-rotation surfaces 77a, 77b, 77c, 77d of the recess 66.
As in Figs. 5 and 6, each anti-rotation surface 77a, 77b, 77c, 77d comprises two separate sections in the same plane. In this instance it is the lateral sides of opposing protrusions 20a, 20b, 20c, 20d which combine to form a single anti-rotation surface 77a, 77b, 77c, 77d. In this example the functional cross section of the recess does not form a polygon.
The lateral sides of the grooves 720 are not perpendicular to the bottom surface of the grooves 720 but are instead chamfered to form angled torque transmission surfaces 711a', 711a", 711b', 711b", 711c', 711c", 711d', 711d". In the non-torque transmission position therefore, shown in Fig. 7, there is an angle α of approximately 2° between each torque transmission surface 711a', 711a'', 711b', 711b", 711c', 711c", 711d', 711d" and its corresponding anti-rotation surface 77a, 77b, 77c, 77d (see Fig 7A). As the force transmission surfaces are brought into maximum contact, this angle is reduced such that a better surface to surface contact is achieved.

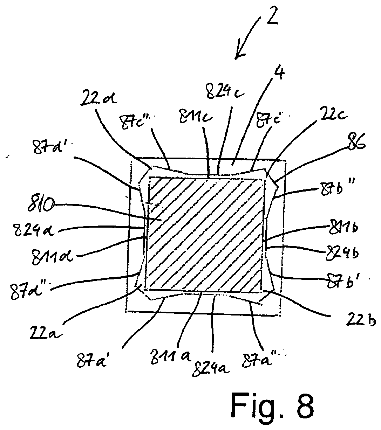

As in previous examples, the torque transmission, surfaces form paired surfaces 711a', 711a''; 711b', 711b"; 711c', 711c"; 711d', 711d", each pair facing and co-operating with the same anti-rotation surface 77a, 77b, 77c, 77d. This enables torque transmission to occur in either direction in a manner that utilises every anti-rotation surface. The internal angle between the surfaces of each pair is in this example approximately 178°.
As mentioned above, instead of creating chamfered paired force transmission surfaces on the bolt it is also possible to create paired force transmission surfaces in the recess. In contrast to the examples shown in Figs. 2 to 7, Fig. 8 relates to an example in which the recess 86 comprises paired anti-rotation surfaces for each torque transmission surface. In this example, the cross-sectional contour of the bolt 810 is square-shaped, each side forming a torque transmission surface 811a, 811b, 811c, 811d.
The cross-sectional contour of the recess 86 also has the base form of a square with greater dimensions than the cross-sectional contour of the bolt 810. In addition, the corners of the recess 86 are recessed by cavities 22a, 22b, 22c, 22d, such that the opposing inner surfaces of each cavity form anti-rotation surfaces 87a', 87a", 87b', 87b", 87c', 87c", 87d', 87d''. Hence, each torque transmission surface 811a, 811b, 811c, 811d, when the bolt 810 is received in the recess 86, faces paired anti-rotation surfaces 87a', 87a"; 87b', 87b"; 87c', 87c"; 87d', 87d", which are angled with respect to each other. The angle between each torque transmission surface and anti-rotation surface is at its minimum, and is preferably eliminated, when the force transmission surfaces are in the second, torque transmitting position.
The surfaces of the paired torque transmission surfaces are separated by side areas 824a, 824b, 824c, 824d. A first of each paired anti-rotation surfaces 87a', 87b', 87c', 87d' is intended to cooperate with the respective torque transmission surface 811a, 811b, 811c, 811d when the insertion tool is rotated relative to the implant in a clockwise direction and a second of each paired anti-rotation surfaces 87a", 87b", 87c", 87d" is intended to cooperate with the same torque transmission surface 811a, 811b, 811c, 811d when the insertion tool is rotated relative to the implant in counter-clockwise direction. This enables torque transmission to occur in either direction in a manner that utilises every anti-rotation surface.

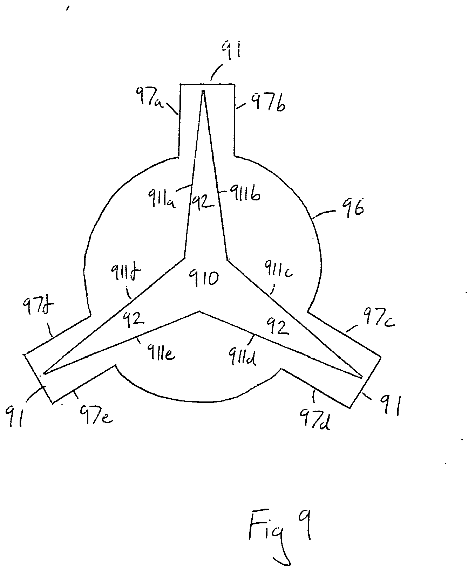

In other examples however two directional torque transmission can be achieved with equal numbers of torque transmission and anti-rotation surfaces. Such an example is shown in Fig. 9. Here the recess 96 is in the form of a circle having three protruding arms 91 spaced at regular intervals. Each longitudinal surface of the arms 91 forms an anti-rotation surface 97a, 97b, 97c, 97d, 97e, 97f. The bolt 910 comprises a cross having three tapered arms 92. The tapered surfaces of these arms 92 form torque transmission surfaces 911a, 911b, 911c, 911d, 911e, 911f that, while the bolt 910 is received within the recess 96, can be rotated between a first, non-torque transmitting position (shown in Fig. 9) and a second torque transmitting position. When the torque transmission surfaces 911a, 911b, 911c, 911d, 911e, 911f are brought into contact with the anti-rotation surfaces 97a, 97b, 97c, 97d, 97e, 97f, the angle between the contacting surfaces is less than in the first, non-torque transmitting position. In this example, however, not all anti-rotation surfaces 97a, 97b, 97c, 97d, 97e, 97f are contacted during torque transmission. Instead, one set of torque transmission surfaces 911b, 911d, 911f are brought into torque transmitting contact with one set of anti-rotation surfaces 97b, 97d, 97f when the insertion tool is rotated in a clockwise direction and a second set of torque transmission surfaces 911a, 911c, 911e are brought into torque transmitting contact with a second set of anti-rotation surfaces 97a, 97c, 97e when the insertion tool is rotated in an anti-clockwise direction. In this example therefore, torque transmission in both directions is achieved without the provision of paired force transmission surfaces.

In the majority of the combinations shown in the figures above, the recess has been described as forming the anti-rotation means of the implant and the bolt as forming the anti-rotation means of the insertion tool. However, in each combination the situation can be reversed such that the dental implant comprises a bolt 10, 310, 410, 510, 610, 710, 810, 910 and the insertion tool the recess 6, 36, 46, 56, 66, 86, 96. Therefore, in these combinations the recess would comprise torque transmission surfaces and the bolt anti-rotation surfaces.

The above described combinations are for illustrative purposes only and the skilled man will realize that many alternative arrangements are possible which fall within the scope of the claims.

## Claims

1. A combination of a dental implant and an insertion tool for inserting the dental implant into a bone of a patient,
the dental implant comprising an anti-rotation means having a non-circular cross-sectional contour which comprises at least one planar force transmission surface in the form of an anti-rotation surface (7a, 7b, 7c, 7d), and
the insertion tool comprising an anti-rotation means having a non-circular cross-sectional contour which comprises at least one planar force transmission surface in the form of a torque transmission surface (11a', 11a"; 11b', 11b"; 11c', 11c"; 11d', 11d")
one of said anti-rotation means forming a recess (6), and the other of said anti-rotation means forming a bolt (10) having a rotational axis and designed to be received in the direction of the rotational axis in the recess (6), such that the at least one anti-rotation surface and at least one torque transmission surface can cooperate to transmit torque between the parts,
the anti-rotation surface (7a, 7b, 7c, 7d) and the torque transmission surface (11a', 11a"; 11b', 11b"; 11c', 11c"; 11d', 11d") being arranged such that, while the bolt (10) is received in the recess (6), said anti-rotation surface (7a, 7b, 7c, 7d) and said torque transmission surface (11a', 11a"; 11b', 11b"; 11c', 11c" ; 11d', 11d") can be rotated relative to one another between a first, non-torque transmission position, in which said anti-rotation surface (7a, 7b, 7c, 7d) and said torque transmission surface (11a', 11a"; 11b', 11b"; 11c', 11c"; 11d', 11d") have little or no contact, and a second, torque transmission position, in which said anti-rotation surface (7a, 7b, 7c, 7d) and said torque transmission surface (11a', 11a"; 11b', 11b"; 11c', 11c"; 11d', 11d") are in maximum contact with each other, wherein the angle between the anti-rotation surface (7a, 7b, 7c, 7d) and the torque transmission surface (11a', 11a"; 11b', 11b"; 11c', 11c"; 11d', 11d") is less in the second position than in the first position,
the implant and/or insertion tool comprising at least two force transmission surfaces (7a, 7b, 7c, 7d),
one of the anti-rotation means comprising at least one force transmission surface and the other anti-rotation means comprising at least two force transmission surfaces, said surfaces being arranged such that, while the bolt (10) is received in the recess (6), relative rotation in either direction results in at least one anti-rotation surface and at least one torque transmission surface being brought into maximum contact with each other, the angle between said anti-rotation surface (7a, 7b, 7c, 7d) and torque transmission surface (11a', 11a"; 11b', 11b"; 11c', 11c"; 11d', 11d",) being less in this position than a first, non-torque transmission position, and
one of the anti-rotation means comprising paired planar force transmission surfaces for co-operation with each planar force transmission surface of the other anti-rotation means,
**characterised in that**
the anti-rotation means of one of the implant and insertion tool is non-polygonal while comprising a functional cross-section defining a regular polygon and
the anti-rotation means of the other of the implant and insertion tool is non-polygonal while comprising a functional cross section defining an irregular polygon.

2. Combination according to claim 1, **characterised in that** the implant or insertion tool comprises from two to six, preferably from three to four, and more preferably four force transmission surfaces (7a, 7b, 7c, 7d).

3. Combination according to claim 1 or 2, **characterized in that** the angle enclosed between the paired planar force transmission surfaces is between 150° to 178°, preferably 166° to 178°.

4. Combination according to any preceding claim, **characterised in that** the other of the anti-rotation means comprises central cut outs in each force transmission surface.

5. Combination according to claim 4, **characterised in that** each of the paired force transmission surfaces converge to form a central peak which, when the bolt is received in the recess, is located within a cut out.

6. Combination according to any preceding claim, **characterised in that** one of the anti-rotation means comprises two sets of planar force transmission surfaces, the first set being arranged for maximum contact with at least some of the force transmission surfaces of the other anti-rotation means when the insertion tool is rotated relative to the implant in a clockwise direction and the second set being arranged for maximum contact with at least some of the force transmission surfaces of the other anti-rotation means when the insertion tool is rotated relative to the implant in a counter-clockwise direction.

7. Combination according to claim 6, **characterised in that** each set of planar force transmission surfaces defines a regular polygon, the polygons being coaxial but rotationally offset from one another.

8. Combination according to any preceding claim, **characterised in that** the functional cross-sectional contour of the recess defines a regular polygon, each side forming a force transmission surface, and the cross-sectional contour of the bolt has the base form of the same polygon, each side of the polygon being chamfered so as to form paired force transmission surfaces such that, in use, each force transmission surface of the recess can be contacted by two force transmission surfaces of the bolt.

9. Combination according to any preceding claim, **characterized in that** in the first, non-torque transmission position the angle between the anti-rotation surface (7a, 7b, 7c, 7d) and the torque transmission surface (11a', 11a"; 11b', 11b"; 11c', 11c"; 11d', 11d") is less than x/2, with x being the angle of rotational symmetry of the regular polygon.

10. Combination according to any of the preceding claims, **characterized in that** in the first, non-torque transmission position the angle between the anti-rotation surface (7a, 7b, 7c, 7d) and the torque transmission surface (11a', 11a"; 11b', 11b"; 11c', 11c"; 11d', 11d") is less than 15°, more preferably between 1° and 7°, most preferably between 2° and 5°.

11. Combination according to any of the preceding claims, **characterized in that** the insertion tool comprises:
a proximal end;
a distal end comprising an anti-rotation means having a non-circular cross-section which comprises a plurality of planar torque transmission surfaces and has the base form of a polygon, each side of the polygon being chamfered to form two paired planar torque transmission surfaces.

12. Combination according to claim 11, wherein the angle between the two planar torque transmission surfaces is between 150° to 178°, preferably 166° to 178°.

13. Combination according to claim 11 or 12, wherein the two chamfered surfaces of each side converge to form a central peak.

14. Combination according to claim 11, 12 or 13, wherein the corners of the anti-rotation means are rounded.

15. Combination according to any of claims 11 to 14, wherein the base polygon is a square.

16. Insertion tool for inserting a dental implant into the bone, the insertion tool comprising a distal end for insertion into a recess in the coronal end of the implant, the shape of the distal end being designed in accordance with a method comprising the steps of;
creating a virtual initial cross section that mirrors the cross-section of the implant recess;
rotating the cross section of the distal end such that this overlaps the cross-section of the recess and forms areas of intersection between the cross-sections;
when the areas of intersection reach a pre-determined size, stopping rotation and altering the cross section of the distal end to remove the sections which overlap the cross section of the recess, thus forming one set of chamfered force transmission surfaces;
rotating the cross section of the distal end in the opposite direction such that this overlaps the cross-section of the recess and forms new areas of intersection between the cross-sections;
when the areas of intersection reach a pre-determined size, stopping rotation and altering the cross section of the distal end to remove the sections which overlap the cross section of the recess, thus forming a second set of chamfered force transmission surfaces;
repeating this procedure if necessary until each chamfered surface has the pre-determined surface area.

## Patentansprüche

1. Eine Kombination eines Dentalimplantats und eines Einführwerkzeugs zum Einführen des Dentalimplantats in einen Knochen eines Patienten,
wobei das Dentalimplantat ein Antirotationsmittel umfasst, das eine Kontur mit nicht-kreisrundem Querschnitt und mindestens einer planaren Kraftübertragungsfläche in Form einer Antirotationsfläche (7a, 7b, 7c, 7d) aufweist, und
das Einführwerkzeug ein Antirotationsmittel umfasst, das eine Kontur mit nicht-kreisrundem Querschnitt und mindestens einer planaren Kraftübertragungsfläche in Form einer Drehmomentübertragungsfläche (11a', 11a"; 11b', 11b"; 11c', 11c"; 11d', 11d") aufweist,
wobei eines der besagten Antirotationsmittel eine Vertiefung (6) und das andere einen Bolzen (10) mit einer Rotationsachse aufweist, wobei der Bolzen zur Aufnahme in die Vertiefung (6) in Richtung der Rotationsachse vorgesehen ist, so dass die mindestens eine Antirotationsfläche und die mindestens eine Drehmomentübertragungsfläche zusammenwirken können, um zwischen den Teilen ein Drehmoment zu übertragen,
wobei die Antirotationsfläche (7a, 7b, 7c, 7d) und die Drehmomentübertragungsfläche (11a', 11a"; 11b', 11b"; 11c', 11c"; 11d', 11d") derart angeordnet sind, dass während der Aufnahme des Bolzens (10) in die Vertiefung (6) besagte Antirotationsfläche (7a, 7b, 7c, 7d) und besagte Drehmomentübertragungsfläche (11a', 11a"; 11b', 11b" ; 11c', 11c" ; 11d', 11d") relativ zueinander rotiert werden können zwischen einer ersten Position ohne Drehmomentübertragung, in welcher besagte Antirotationsfläche (7a, 7b, 7c, 7d) und besagte Drehmomentübertragungsfläche (11a', 11a"; 11b', 11b"; 11c', 11c"; 11d', 11d") wenig oder keinen Kontakt haben, und einer zweiten Drehmoment-übertragenden Position, in welcher besagte Antirotationsfläche (7a, 7b, 7c, 7d) und besagte Drehmomentübertragungsfläche (11a', 11a"; 11b', 11b"; 11c', 11c"; 11d', 11d") in maximalem Kontakt miteinander sind,
wobei der Winkel zwischen der Antirotationsfläche (7a, 7b, 7c, 7d) und der Drehmomentübertragungsfläche (11a', 11a"; 11b', 11b"; 11c', 11c"; 11d', 11d") in der zweiten Position kleiner ist als in der ersten Position,
wobei das Implantat und/oder das Einführwerkzeug mindestens zwei Kraftübertragungsflächen (7a, 7b, 7c, 7d) umfasst,
eines der Antirotationsmittel mindestens eine Kraftübertragungsfläche und das andere Antirotationsmittel mindestens zwei Kraftübertragungsflächen aufweist, wobei besagte Flächen derart angeordnet sind, dass während der Aufnahme des Bolzens (10) in die Vertiefung (6) eine relative Rotation in der einen oder anderen Richtung dazu führt, dass mindestens eine Antirotationsfläche und mindestens eine Drehmomentübertragungsfläche miteinander in maximalen Kontakt gebracht werden, wobei der Winkel zwischen besagter Antirotationsfläche (7a, 7b, 7c, 7d) und Drehmomentübertragungsfläche (11a', 11a"; 11b', 11b"; 11c', 11c"; 11d', 11d") in dieser Position kleiner ist als in einer ersten Position ohne Drehmomentübertragung, und
eines der Antirotationsmittel gepaarte planare Kraftübertragungsflächen zum Zusammenwirken mit jeder planaren Kraftübertragungsfläche des anderen Antirotationsmittels umfasst,
**dadurch gekennzeichnet, dass**
das Antirotationsmittel der einen Komponente von Implantat und Einführwerkzeug nicht polygonal ist, jedoch einen ein reguläres Polygon definierenden funktionellen Querschnitt aufweist und
das Antirotationsmittel der anderen Komponente von Implantat und Einführwerkzeug nicht polygonal ist, jedoch einen ein irreguläres Polygon definierenden funktionellen Querschnitt aufweist.

2. Kombination gemäss Anspruch 1, **dadurch gekennzeichnet, dass** das Implantat oder das Einführwerkzeug zwei bis sechs, bevorzugt drei bis vier, bevorzugter vier, Kraftübertragungsflächen (7a, 7b, 7c, 7d) aufweist.

3. Kombination gemäss Anspruch 1 oder 2, **dadurch gekennzeichnet, dass** der Winkel zwischen den gepaarten planaren Kraftübertragungsflächen zwischen 150° bis 178°, vorzugsweise 166° bis 178°, beträgt.

4. Kombination gemäss jedem der vorangehenden Ansprüche, **dadurch gekennzeichnet, dass** das andere Antirotationsmittel zentrale Ausnehmungen in jeder der Kraftübertragungsflächen aufweist.

5. Kombination gemäss Anspruch 4, **dadurch gekennzeichnet, dass** jede der gepaarten Kraftübertragungsflächen sich zu einer zentralen Spitze verjüngt, wobei besagte Spitze nach Aufnahme des Bolzens in die Vertiefung in einer Ausnehmung angeordnet ist.

6. Kombination gemäss jedem der vorangehenden Ansprüche, **dadurch gekennzeichnet, dass** eines der Antirotationsmittel zwei Set an planaren Kraftübertragungsflächen aufweist, wobei das erste Set für einen maximalen Kontakt mit wenigstens einigen der Kraftübertragungsflächen des anderen Antirotationsmittels bei Drehung des Einführwerkzeugs relativ zum Implantat im Uhrzeigersinn angeordnet ist und das zweite Set für einen maximalen Kontakt mit wenigstens einigen der Kraftübertragungsflächen des anderen Antirotationsmittels bei Drehung des Einführwerkzeugs relativ zum Implantat im Gegenuhrzeigersinn angeordnet ist.

7. Kombination gemäss Anspruch 6, **dadurch gekennzeichnet, dass** jedes Set an planaren Kraftübertragungsflächen ein reguläres Polygon definiert, wobei die Polygone zueinander koaxial aber rotationsmässig versetzt angeordnet sind.

8. Kombination gemäss jedem der vorangehenden Ansprüche, **dadurch gekennzeichnet, dass** die funktionelle Querschnittskontur der Vertiefung eine reguläres Polygon definiert, wobei jede Seite eine Kraftübertragungsfläche bildet, und die Querschnittskontur des Bolzens eine Grundform desselben Polygons aufweist, wobei jede Seite des Polygons abgerundet ist, um gepaarte Kraftübertragungsflächen zu formen, derart, dass im Gebrauch jede Kraftübertragungsfläche der Vertiefung mit zwei Kraftübertragungsflächen des Bolzens in Kontakt kommen kann.

9. Kombination gemäss jedem der vorangehenden Ansprüche, **dadurch gekennzeichnet, dass** in der ersten Position ohne Drehmomentübertragung der Winkel zwischen der Antirotationsfläche (7a, 7b, 7c, 7d) und der Drehmomentübertragungsfläche (11a', 11a"; 11b', 11b"; 11c', 11c"; 11d', 11d") kleiner ist als x/2, wobei x der Winkel der Rotationssymmetrie des regulären Polygons ist.

10. Kombination gemäss jedem der vorangehenden Ansprüche, **dadurch gekennzeichnet, dass** in der ersten Position ohne Drehmomentübertragung der Winkel zwischen der Antirotationsfläche (7a, 7b, 7c, 7d) und der Drehmomentübertragungsfläche (11a', 11a"; 11b', 11b"; 11c', 11c"; 11d', 11d") weniger als 15°, bevorzugt zwischen 1° und 7°, am meisten bevorzugt zwischen 2° und 5°, ist.

11. Kombination gemäss jedem der vorangehenden Ansprüche, **dadurch gekennzeichnet, dass** das Einführwerkzeug folgendes umfasst:
ein proximales Ende;
ein distales Ende mit einem Antirotationsmittel, das einen nicht-kreisrunden Querschnitt mit einer Mehrzahl an planaren Drehmomentübertragungsflächen und einer Grundform eines Polygons aufweist, wobei jede Seite des Polygons abgerundet ist, um zwei gepaarte planare Drehmomentübertragungsflächen zu bilden.

12. Kombination gemäss Anspruch 11, **dadurch gekennzeichnet, dass** der Winkel zwischen den zwei planaren Drehmomentübertragungsflächen 150° bis 178°, bevorzugt 166° bis 178°, beträgt.

13. Kombination gemäss Anspruch 11 oder 12, **dadurch gekennzeichnet, dass** die zwei abgerundeten Flächen von jeder Seite aufeinander zu verlaufen, um eine zentrale Spitze zu bilden.

14. Kombination gemäss Anspruch 11, 12 oder 13, **dadurch gekennzeichnet, dass** die Ecken des Antirotationsmittels abgerundet sind.

15. Kombination gemäss jedem der Ansprüche 11 bis 13, **dadurch gekennzeichnet, dass** die Grundform des Polygons ein Quadrat ist.

16. Einführwerkzeug zum Einführen eines Dentalimplantats in den Knochen, wobei das Einführwerkzeug ein distales Ende zum Einführen in eine Vertiefung im koronalen Ende des Implantats aufweist, wobei die Form des distalen Endes mithilfe eines Verfahrens umfassend die folgenden Schritte gebildet wird:
Bilden eines initialen virtuellen Querschnitts, welcher den Querschnitt der Vertiefung im Implantat widerspiegelt;
Drehen des Querschnitts des distalen Endes, so dass dieser mit dem Querschnitt der Vertiefung überlappt und sich überschneidende Bereiche zwischen den Querschnitten bilden;
Stoppen der Drehung sobald die sich überschneidenden Bereiche eine vorbestimmte Grösse erreichen, und Ändern des Querschnitts des distalen Endes, um die mit dem Querschnitt der Vertiefung überlappenden Bereiche zu entfernen, wodurch ein Set von abgerundeten Kraftübertragungsflächen gebildet wird;
Drehen des Querschnitts des distalen Endes in entgegengesetzter Richtung, so dass dieser mit dem Querschnitt der Vertiefung überlappt und neue sich überschneidende Bereiche zwischen den Querschnitten gebildet werden;
Stoppen der Drehung sobald die sich überschneidenden Bereiche eine vorbestimmte Grösse erreichen, und Ändern des Querschnitts des distalen Endes, um die mit dem Querschnitt der Vertiefung überlappenden Bereiche zu entfernen, wodurch ein zweites Set von abgerundeten Kraftübertragungsflächen gebildet wird;
Wiederholen dieses Vorgehens, wenn nötig, bis jede abgerundete Fläche eine vorbestimmte Flächengrösse aufweist.

## Revendications

1. Combinaison d'un implant dentaire et d'un outil d'insertion pour insérer l'implant dentaire dans un os d'un patient,
l'implant dentaire comprenant un moyen anti-rotation présentant un contour de section transversale non-circulaire qui comprend au moins une surface de transmission de force plane sous la forme d'une surface anti-rotation (7a, 7b, 7c, 7d), et
l'outil d'insertion comprenant un moyen anti-rotation présentant un contour de section transversale non-circulaire qui comprend au moins une surface de transmission de force plane sous la forme d'une surface de transmission de moment (11a', 11a"; 11b', 11b"; 11c', 11c"; 11d', 11d")
un desdits moyens anti-rotation formant un creux (6), et l'autre desdits moyens anti-rotation formant un tenon (10) ayant un axe de rotation et conçu pour être logé dans la direction de l'axe de rotation dans le creux (6), de telle façon que la au moins une surface anti-rotation et la au moins une surface de transmission de moment peuvent coopérer pour transmettre un moment entre les parties,
la surface anti-rotation (7a, 7b, 7c, 7d) et la surface de transmission de moment (11a', 11a"; 11b', 11b"; 11c', 11c"; 11d', 11d") étant disposée de telle façon que, pendant que le tenon (10) est logé dans le creux (6), ladite surface anti-rotation (7a, 7b, 7c, 7d) et ladite surface de transmission de moment (11a', 11a"; 11b', 11b"; 11c', 11c"; 11d', 11d") peuvent être tournées l'une par rapport à l'autre entre une première position ne transmettant pas le moment, dans laquelle ladite surface anti-rotation (7a, 7b, 7c, 7d) et ladite surface de transmission de moment (11a', 11a"; 11b', 11b"; 11c', 11c"; 11d', 11d") présentent peu ou pas de contact, et une seconde position transmettant le moment, dans laquelle ladite surface anti-rotation (7a, 7b, 7c, 7d) et ladite surface de transmission de moment (11a', 11a"; 11b', 11b"; 11c', 11c" ; 11d', 11d") sont en contact maximum l'une avec l'autre, l'angle entre la surface anti-rotation (7a, 7b, 7c, 7d) et la surface de transmission de moment (11a', 11a"; 11b', 11b"; 11c', 11c"; 11d', 11d") étant inférieur dans la seconde position à celui dans la première position,
l'implant et/ou l'outil d'insertion comprenant au moins deux surfaces de transmission de force (7a, 7b, 7c, 7d),
un des moyens anti-rotation comprenant au moins une surface de transmission de force et l'autre moyen anti-rotation comprenant au moins deux surfaces de transmission de force, lesdites surfaces étant disposées de telle façon que, pendant que le tenon (10) est logé dans le creux (6), une rotation relative dans l'une ou l'autre direction résulte en au moins une surface anti-rotation et au moins une surface de transmission de moment étant mise en contact maximum l'une avec l'autre, l'angle entre ladite surface anti-rotation (7a, 7b, 7c, 7d) et ladite surface de transmission de moment (11a', 11a"; 11b', 11b"; 11c', 11c"; 11d', 11d",) étant inférieur dans cette position que dans une première position ne transmettant pas le moment, et
un des moyens anti-rotation comprenant des surfaces de transmission de force planes appariées pour coopérer avec chaque surface de transmission de force plane de l'autre moyen anti-rotation,
**caractérisée en ce que**
le moyen anti-rotation de l'un de l'implant ou de l'outil d'insertion est non-polygonal tout en comprenant une section transversale fonctionnelle définissant un polygone régulier et
le moyen anti-rotation de l'autre de l'implant ou de l'outil d'insertion est non-polygonal tout en comprenant une section transversale fonctionnelle définissant un polygone irrégulier.

2. Combinaison selon la revendication 1, **caractérisée en ce que** l'implant ou l'outil d'insertion comprend de deux à six, préférablement de trois à quatre, et plus préférablement quatre surfaces de transmission de force (7a, 7b, 7c, 7d).

3. Combinaison selon la revendication 1 ou 2, **caractérisée en ce que** l'angle formé entre les surfaces de transmission de force planes appariées est entre 150° et 178°, préférablement 166° et 178°.

4. Combinaison selon l'une quelconque des revendications précédentes, **caractérisée en ce que** l'autre des moyens anti-rotation comprend des évidements centraux dans chaque surface de transmission de force.

5. Combinaison selon la revendication 4, **caractérisée en ce que** chacune des surfaces de transmission de force appariées converge pour former un pic central qui, lorsque le tenon est logé dans le creux, est situé dans l'évidement.

6. Combinaison selon l'une quelconque des revendications précédentes, **caractérisée en ce que** l'un des moyens anti-rotation comprend deux ensembles de surfaces de transmission de force planes, le premier ensemble étant disposé pour un contact maximum avec au moins certaines des surfaces de transmission de force de l'autre moyen anti-rotation quand l'outil d'insertion est tourné par rapport à l'implant dans le sens des aiguilles d'une montre et le second ensemble étant disposé pour un contact maximum avec au moins certaines des surfaces de transmission de force de l'autre moyen anti-rotation quand l'outil d'insertion est tourné par rapport à l'implant dans le sens contraire des aiguilles d'une montre.

7. Combinaison selon la revendication 6, **caractérisée en ce que** chaque ensemble de surfaces de transmission de force planes définit un polygone régulier, les polygones étant coaxiaux mais décalés l'un par rapport à l'autre en rotation.

8. Combinaison selon l'une quelconque des revendications précédentes, **caractérisée en ce que** le contour de section transversale fonctionnel du creux définit un polygone régulier, chaque côté formant une surface de transmission de force, et le contour de section transversale du tenon a la forme de base du même polygone, chaque côté du polygone étant chanfreiné de façon à former des surfaces de transmission de force appariées de telle façon que, lors de l'utilisation, chaque surface de transmission de force du creux peut être en contact avec deux surfaces de transmission de force du tenon.

9. Combinaison selon l'une quelconque des revendications précédentes, **caractérisée en ce que** dans la première position ne transmettant pas le moment l'angle entre la surface anti-rotation (7a, 7b, 7c, 7d) et la surface de transmission de moment (11a', 11a"; 11b', 11b"; 11c', 11c"; 11d', 11d") est inférieur à x/2, où x est l'angle de symétrie rotationnelle du polygone régulier.

10. Combinaison selon l'une quelconque des revendications précédentes, **caractérisée en ce que** dans la première position ne transmettant pas le moment l'angle entre la surface anti-rotation (7a, 7b, 7c, 7d) et la surface de transmission de moment (11a', 11a"; 11b', 11b"; 11c', 11c"; 11d', 11d") est inférieur à 15°, plus préférablement entre 1° et 7°, de façon la plus préférée entre 2° et 5°.

11. Combinaison selon l'une quelconque des revendications précédentes, **caractérisée en ce que** l'outil d'insertion comprend:
une extrémité proximale;
une extrémité distale comprenant un moyen anti-rotation ayant une section transversale non-circulaire qui comprend une multitude de surfaces de transmission de moment planes et a la forme de base d'un polygone, chaque côté du polygone étant chanfreiné pour former deux surfaces de transmission de moment planes appariées.

12. Combinaison selon la revendication 11, l'angle entre les deux surfaces de transmission de moment planes étant entre 150° à 178°, préférablement 166° à 178°.

13. Combinaison selon la revendication 11 ou 12, les deux surfaces chanfreinées convergeant de chaque côté pour former un pic central.

14. Combinaison selon la revendication 11, 12 ou 13, les coins du moyen anti-rotation étant arrondis.

15. Combinaison selon l'une quelconque des revendications 11 à 14, le polygone de base étant un carré.

16. Outil d'insertion pour insérer un implant dentaire dans l'os, l'outil d'insertion comprenant une extrémité distale pour l'insertion dans un creux dans l'extrémité coronale de l'implant, la forme de l'extrémité distale étant conçue en accord avec une méthode comprenant les étapes de ;
création d'une section transversale initiale virtuelle qui reflète la section transversale du creux de l'implant;
rotation de la section transversale de l'extrémité distale de telle façon que celle-ci chevauche la section transversale du creux et forme des zones d'intersection entre les sections transversales;
quand les zones d'intersection atteignent une taille prédéterminée, stopper la rotation et modifier la section transversale de l'extrémité distale pour enlever les sections qui chevauchent la section transversale du creux, formant ainsi un ensemble de surfaces de transmission de force chanfreinées;
rotation de la section transversale de l'extrémité distale dans la direction opposée de telle façon que celle-ci chevauche la section transversale du creux et forme de nouvelles zones d'intersection entre les sections transversales;
quand les zones d'intersection atteignent une taille prédéterminée, stopper la rotation et modifier la section transversale de l'extrémité distale pour enlever les sections qui chevauchent la section transversale du creux, formant ainsi un second ensemble de surfaces de transmission de force chanfreinées;
répéter cette procédure si nécessaire jusqu'à ce que chaque surface chanfreinée présente la zone de surface prédéterminée.
